# FASCICULE DE BREVET EUROPEEN

(11) **EP 0 428 456 B1**
(45) Date de publication et mention de la délivrance du brevet: **15.12.1993**
(21) Numéro de dépôt: 90420485.6
(22) Date de dépôt: 12.11.1990
(51) Int. Cl.: B29C 53/56, B65H 75/28

(54) **Procédé de fabrication de tubes composites à base de tissu et de résine**
Verfahren zum Herstellen von Verbundrohren aus Gewebe und Harz
Method for manufacturing composite tubes from fabric and resin

(30) Priorité: 14.11.1989 FR 8915284
(43) Date de publication de la demande: 22.05.1991
(73) Titulaire: LE CARBONE LORRAINE, 92400 Courbevoie (FR)
(72) Inventeur: Bontems, Maurice, F-54530 Pagny Sur Moselle (FR); Desmicht, Denis, F-54530 Pagny Sur Moselle (FR)
(74) Mandataire: Séraphin, Léon

(56) Documents cités:
- AU-B- 53 009
- DE-A- 3 317 370
- DE-C- 431 970
- FR-A- 1 389 084
- US-A- 2 454 213
- US-A- 2 609 319
- US-A- 2 809 144
- US-A- 3 028 070

## Description

### DOMAINE DE L'INVENTION

L'invention concerne le domaine des tubes en matériau composite comportant un renfort fibreux et de manière plus précise elle concerne un procédé de fabrication desdits tubes.

### ETAT DE LA TECHNIQUE

Les procédés pour fabriquer des tubes en matériau composite à matrice de résine et à renfort de fibres comportent classiquement les étapes suivantes :
a) fabrication d'un mandrin de forme appropriée : par exemple cylindrique ou conique pour un mât ou une canne à pêche.
b) découpage d'une nappe de tissu en lés, la forme et les dimensions de chaque lé dépendant de la géométrie du tube et du nombre d'enroulements que l'on veut effectuer.
c) préimprégnation du tissu avec une résine constituant la matrice du composite. Après imprégnation, le tissu préimprégné, appelé aussi "prépreg" est soit stocké soit engagé à l'étape suivante.
d) fixation d'un bord du lé de prépreg sur une génératrice du mandrin : cette opération est réalisée habituellement par thermocollage à l'aide d'un fer à repasser. On positionne d'abord le bord du prépreg sur une génératrice et on applique un fer à repasser. Sous l'action de la chaleur et par suite également de la pression exercée, le prépreg, initialement d'aspect sec et non collant, devient poisseux et adhérent au mandrin.
e) roulage autour du mandrin à l'aide d'un système approprié tel qu'une table chauffante à déplacement latéral.
f) le tube ainsi formé est enveloppé d'une gaine, film plastique ou de cellophane destiné à maintenir la cohésion du tube lors de l'étape suivante.
g) réticulation du composite, démandrinage et retrait de la gaine plastique.
h) traitement thermique éventuel.

Un procédé de ce type est décrit dans la demande japonaise n° 63 - 43221.

### OBJET DE L'INVENTION

L'invention a pour premier objet un procédé de fabrication de tubes composites plus économique que celui de l'art antérieur.
En effet, le développement des matériaux composites est freiné par le coût élevé de ces matériaux, dû en partie au coût des matières premières mais aussi aux coûts élevés de transformation : si certaines étapes sont relativement automatisées, ainsi par exemple la découpe des lés, d'autres, qui sont réalisées de manière manuelle et artisanale, constituent des goulets d'étranglement, freinent la productivité et retardent l'introduction de l'automation.

A cet égard, l'étape de fixation du lé de prépreg sur une génératrice du mandrin est particulièrement longue et délicate, surtout dans le cas de tubes de petit diamètre, par exemple de diamètre inférieur à 20 mm, et de grande longueur, par exemple de longueur dépassant 500 mm.
L'invention a pour premier objet un procédé de fixation du lé de prépreg qui supprime les inconvénients précités. D'autres objets de l'invention apparaîtront dans la description.

### DESCRIPTION DE L'INVENTION

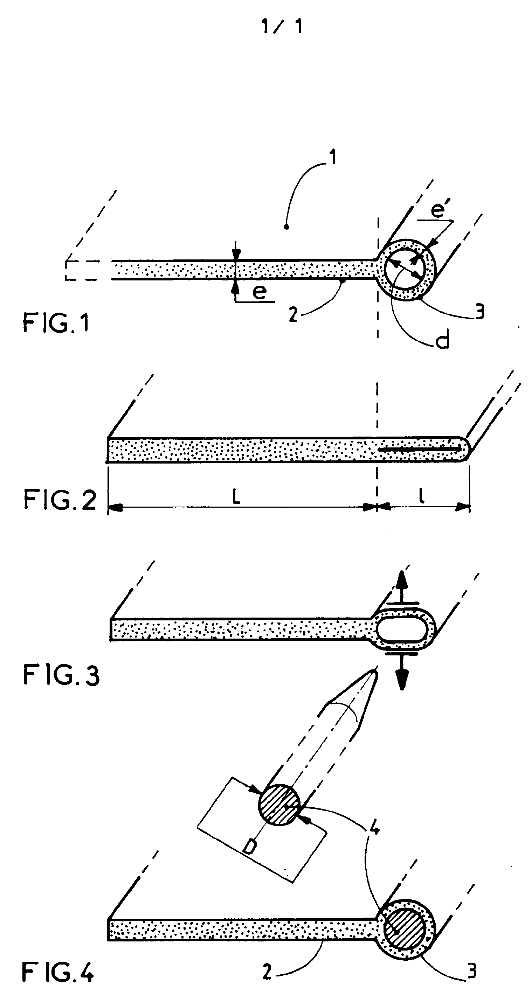

L'invention a pour premier objet un procédé de fabrication de tube en matériau composite comportant l'utilisation d'une nappe de renfort découpée en lés, leur imprégnation par une résine , la fixation de chaque lé préimprégné sur un mandrin, le roulage du préimprégné autour du mandrin, la mise sous gaine plastique, la réticulation de la résine, le retrait de la gaine plastique et du mandrin, et éventuellement la cokéfaction du tube ainsi obtenu, caractérisé en ce qu'on utilise une nappe de renfort comportant une partie ruban et une partie gaine à surface intérieure uniforme et régulière, de géométrie adaptée à celle du mandrin et en ce qu'on fixe le préimprégné, obtenu à partir de ladite nappe de renfort, sur le mandrin en introduisant ledit mandrin dans la partie gaine, de manière à ce que la rotation du mandrin puisse entraîner le roulage de la partie ruban et à obtenir un tube à surface intérieure uniforme et régulière. Les figures 1 à 4 aideront à comprendre l'invention.

### DESCRIPTION DES FIGURES

La figure 1 schématise en coupe une nappe de renfort (1) comportant une partie ruban (2) d'épaisseur e, une partie gaine (3) d'épaisseur e' qui, déployée, a un diamètre intérieur d.

La figure 2 schématise un lé ayant la même épaisseur pour sa partie ruban de largeur L et pour sa partie gaine de largeur 1 à plat.

La figure 3 schématise un dispositif à deux ventouses pour entrouvrir la gaine et permettre l'introduction du mandrin (4).

La figure 4 schématise le lé et le mandrin (4) en position avant roulage.

A noter que dans ces schémas, l'épaisseur a été exagérée par rapport aux autres dimensions pour faciliter la description de l'invention.

### DESCRIPTION DETAILLEE DE L'INVENTION

L'invention supprime donc le positionnement du bord d'un lé sur une génératrice du mandrin et le collage au fer chaud, en effet, il suffit de glisser le mandrin dans la gaine. Le diamètre D du mandrin est très voisin à légèrement supérieur à celui d de l'intérieur de la gaine (voir figures 1 et 4) de façon que, compte tenu d'une certaine élasticité du tissu, le mandrin puisse glisser sans difficulté et que les forces de frottement entre mandrin et gaine soient suffisantes pour permettre le roulage de la partie ruban.
Ce procédé est facile à automatiser : en effet, à partir d'une pile de lés préimprégnés, on positionne automatiquement l'orifice de la gaine d'un lé face à une extrémité du mandrin, on entrouvre l'orifice, par exemple à l'aide d'un dispositif comportant deux ventouses de manière à permettre l'introduction du mandrin (voir figure 3) et on poursuit par le roulage de manière connue.
Autre avantage de ce procédé, le tube a une surface intérieure uniforme et régulière. Cette caractéristique qui peut n'avoir pas beaucoup d'intérêt dans certaines applications, est essentielle dans d'autres, comme cela sera montré dans la suite de cette description.
Enfin, l'absence de bande de collage (zône d'appui du fer à repasser) contribue à l'uniformité de la surface intérieure du tube et facilite le retrait du mandrin.

Selon l'invention, l'épaisseur e du tissu constituant le ruban est avantageusement le double de l'épaisseur e' de la partie du tissu constituant la gaine. En effet la fabrication de préimprégné ou prépreg comporte une imprégnation de résine suivie d'un essorage entre rouleaux qui permet de contrôler le taux de résine : la partie gaine, à plat, ayant la même épaisseur que la partie ruban (voir figure 2), l'ensemble du lé aura une répartition homogène de la résine, ce qui est favorable à la qualité finale du tube.

Il peut être avantageux de choisir une nappe de renfort (1) présentant une texture différente pour la partie ruban et pour la partie gaine, en particulier présentant un vide de maille différent pour la partie gaine (3) et pour la partie ruban (2). Selon les applications, on choisira un vide de maille faible, par exemple inférieur à 50 µm, pour la partie ruban et un vide de maille élevé, par exemple supérieur à 500 pm, pour la partie gaine, ou bien l'inverse : vide de maille faible pour la partie gaine et vide de maille élevé pour la partie ruban.
Cette asymétrie dans la direction de l'épaisseur du tube est recherchée notamment en filtration. Pour cette application, on soumet le tube obtenu après réticulation à une cokéfaction et on obtient un tube poreux utilisable en filtration soit tel quel soit comme support de membrane de filtration. L'intérêt d'un matériau filtrant asymétrique est connu : une couche à pores fins assure la fonction de séparation, tandis qu'une autre couche, qui ne présente pas de perte de charge à l'écoulement du filtrat, assure la fonction de support. Généralement le liquide à filtrer circule à l'intérieur des tubes de filtration : dans ce cas, la partie gaine aura un vide de maille faible et la partie ruban un vide de maille plus élevé. De tels tubes résistent particulièrement bien à l'éclatement.
Comme déjà mentionné, les tubes obtenus selon l'invention présentent une surface intérieure uniforme et régulière : cette caractéristique est particulièrement souhaitable dans le cas de l'application filtration.

La nappe de renfort est tissée à partir de fibres connues pour conférer des propriétés mécaniques élevées au composite final, fibres choisies de préférence parmi les fibres de carbone ou leurs précurseurs, les fibres de verre, les fibres de polyamide de type Kevlar (R). Cependant, dans le cas de tubes destinés à l'application filtration, la fibre préférée est la fibre de carbone ou ses précurseurs.

La matrice des tubes selon l'invention est constituée d'une résine par exemple une résine thermodurcissable choisie parmi les résines époxy, polyester insaturé, phénolique, furannique.
Dans le cas de l'application filtration, on choisit de préférence une résine phénolique ou furannique qui laisse après cokéfaction un taux suffisant de carbone pour lier le renfort fibreux.

Les tubes selon l'invention sont de préférence de forme cylindrique ou tronconique, mais l'invention permet tout aussi bien de fabriquer un tube de section carrée par exemple.
Bien qu'il n'y ait pas de limitation de dimension, en longueur ou en diamètre pour réaliser l'invention, le domaine privilégié de l'invention, celui où les gains de productivité sont les plus grands, est celui des tubes de petit diamètre, inférieur à 10 cm et plus particulièrement inférieur à 20 mm, produits en grand nombre, en particulier, les cannes à pêche, les clubs de golf, les mâts de bateaux et de planches à voile, ainsi que les tubes poreux servant eux-mêmes d'élément filtrant ou de support de membrane filtrante.

### EXEMPLE

On a fabriqué un tube poreux carbone-carbone de diamètre extérieur 8,5 mm ± 0,2 mm, de diamètre intérieur 6 mm ± 0,05 mm, de longueur 1200 mm.
On a utilisé pour cela une nappe tissée à partir de fibre de carbone, comportant une partie ruban et une partie gaine. La nappe de 85 mm de large et d'épaisseur 0,6 mm a comme texture un sergé à 18 g/m linéaire. La partie ruban mesure 75 mm de largeur et la partie gaine 10 mm de largeur, soit une gaine de diamètre intérieur 5,77 mm et d'épaisseur 0,3 mm.

On a imprégné cette nappe de résine phénolique catalysée, en solution dans l'eau. Après avoir essoré entre deux rouleaux de manière à retenir un taux de résine de 48 %, on a procédé à une polycondensation de manière à obtenir un prépreg.

On a ensuite introduit ce prépreg sur un mandrin en acier inoxydable préalablement enduit d'une cire de démoulage. Le mandrin mesure 1300 mm de long, pour une nappe de 1200 mm de longueur. Son diamètre est de 6 mm.

On a ensuite roulé la partie ruban sur une table chauffante à 120 °C et on a immédiatement enveloppé l'ensemble par enroulement en spirale d'une bande de cellophane de 20 mm de largeur.

Puis, après un cycle de durcissement du prépreg, on a démandriné. On a cuit le tube ainsi obtenu à une température supérieure à 1000 °C. Le tube ainsi obtenu présente une porosité homogène et une surface intérieure d'une grande régularité. Il peut être utilisé comme élément filtrant ou support de membrane filtrante.

## Revendications

1. Procédé de fabrication de tube en matériau composite comportant l'utilisation d'une nappe de renfort découpée en lés, leur imprégnation par une résine , la fixation de chaque lé préimprégné sur un mandrin, le roulage du préimprégné autour du mandrin, la mise sous gaine plastique, la réticulation de la résine, le retrait de la gaine plastique et du mandrin, et éventuellement la cokéfaction du tube ainsi obtenu, caractérisé en ce qu'on utilise une nappe de renfort (1) comportant une partie ruban (2) et une partie gaine (3) à surface intérieure uniforme et régulière, de géométrie adaptée à celle du mandrin (4) et en ce qu'on fixe le préimprégné obtenu à partir de ladite nappe de renfort sur le mandrin (4) en introduisant ledit mandrin dans la partie gaine (3), de manière à ce que la rotation du mandrin puisse entraîner le roulage de la partie ruban (2) et à obtenir un tube à surface intérieure uniforme et régulière.

2. Procédé selon la revendication 1 dans lequel l'épaisseur e du ruban (2) est double de celle e' de la gaine (3) de manière à ce que l'ensemble de la nappe (1) ait partout sensiblement la même épaisseur.

3. Procédé selon le revendication 1 ou 2 dans lequel la texture du ruban (2) est différente de celle de la gaine (3)

4. Procédé selon la revendication 3 dans lequel la gaine (3) a une texture de maille présentant un vide de maille inférieur a 50 µm et dans lequel le ruban (2) a une texture de maille présentant un vide de maille supérieur à 500 µm.

5. Procédé selon la revendication 3 dans lequel le ruban (2) a une texture de maille présentant un vide de maille inférieur à 50 µm et dans lequel la gaine (3) a une texture de maille présentant un vide de maille supérieur à 500 µm.

6. Procédé selon une quelconque des revendications 1 à 5 dans lequel ladite nappe de renfort (1) est tissée à partir de fibres choisies parmi les fibres de carbone ou leurs précurseurs, les fibres de verre, les fibres de type Kevlar (R).

7. Procédé selon une quelconque des revendications 1 à 6 dans lequel ladite résine servant de matrice est une résine thermodurcissable choisie parmi les résines époxy, polyester insaturé, phénolique, furannique.

8. Procédé selon une quelconque des revendications 1 à 7 dans lequel ledit tube peut être tronconique ou cylindrique, de plus grand diamètre inférieur à 10 cm.

9. Procédé selon une quelconque des revendications 1 à 8 dans lequel on fixe de manière automatique sur le mandrin le lé préimprégné de manière à pouvoir fabriquer des tubes sur une chaîne automatisée.

10. Procédé selon une quelconque des revendications 6 à 9 dans lequel ladite nappe de renfort (1) est tissée à partir de fibres de carbone ou leurs précurseurs, dans lequel le tube obtenu après retrait dudit film plastique et dudit mandrin (4) est soumis à une cokéfaction de manière à rendre poreux ledit tube.

11. Application du procédé selon une quelconque des revendications 1 à 9 à la fabrication de tubes et notamment de cannes à pêche, de clubs de golf, de mâts de bateaux et de planches à voile.

12. Application du procédé selon la revendication 10 à la fabrication de tubes poreux pouvant servir de tube de filtration ou de support de membrane filtrante.

## Patentansprüche

1. Verfahren zur Rohrherstellung aus Verbundmaterial, das die Verwendung eines in Bahnen geschnittenen Verstärkungstuchs, seine Imprägnierung mit einem Harz, die Befestigung jeder vorimprägnierten Bahn auf einem Dorn, das Aufwickeln des Vorimprägnats um den Dorn, das Bringen unter plastische Hülle, die Vernetzung des Harzes, die Abnahme der plastischen Hülle und des Dorns und eventuell die Verkokung des so erhaltenen Rohres vorsieht,
**dadurch gekennzeichnet**,
daß man ein Verstärkungstuch (1) mit einem Bandteil (2) und einem Hüllenteil (3) mit gleichmäßiger und regelmäßiger innerer Oberfläche einer der des Dorns (4) angepaßten Geometrie verwendet und daß man das aus diesem Verstärkungstuch erhaltene Vorimprägnat auf dem Dorn (4) befestigt, indem man den Dorn in den Hüllenteil (3) derart einführt, daß die Rotation des Dorns das Aufwickeln des Bandteils (2) bewirken kann und ein Rohr mit einer gleichmäßigen und regelmäßigen inneren Oberfläche erhalten wird.

2. Verfahren nach dem Anspruch 1, bei dem die Dicke e des Bandes (2) den doppelten Wert derjenigen e' der Hülle (3) derart hat, daß die Gesamtheit des Tuches (1) überall etwa die gleiche Dicke hat.

3. Verfahren nach dem Anspruch 1 oder 2, bei dem die Textur des Bandes (2) von der der Hülle (3) verschieden ist.

4. Verfahren nach dem Anspruch 3, bei dem die Hülle (3) eine Maschentextur mit einem Maschenzwischenraum unter 50 µm hat und bei dem das Band (2) eine Maschentextur mit einem Maschenzwischenraum über 500 µm hat.

5. Verfahren nach dem Anspruch 3, bei dem das Band (2) eine Maschentextur mit einem Maschenzwischenraum unter 50 µm hat und bei dem die Hülle (3) eine Maschentextur mit einem Maschenzwischenraum über 500 µm hat.

6. Verfahren nach irgendeinem der Ansprüche 1 bis 5, bei dem das Verstärkungstuch (1) aus Fasern gewebt wird, die unter den Kohlenstoffasern oder deren Verläufern, den Glasfasern und den Fasern vom Typ Kevlar (R) gewählt werden.

7. Verfahren nach irgendeinem der Ansprüche 1 bis 6, bei dem das als Matrix dienende Harz ein wärmehärtbares Harz ist, das unter den Epoxy-, ungesättigten Polyester-, Phenol- und Furanharzen gewählt wird.

8. Verfahren nach irgendeinem der Ansprüche 1 bis 7, bei dem das Rohr kegelstumpfförmig oder zylindrisch mit einem größten Durchmesser unter 10 cm sein kann.

9. Verfahren nach irgendeinem der Ansprüche 1 bis 8, bei dem man die vorimprägnierte Bahn auf dem Dorn in automatischer Weise derart befestigt, um die Rohre auf einer automatisierten Kette fertigen zu können.

10. Verfahren nach irgendeinem der Ansprüche 6 bis 9, bei dem das Verstärkungstuch (1) aus Kohlenstoffasern oder deren Vorläufern gewebt wird und das nach Abnahme des plastischen Films und des Dorns (4) erhaltene Rohr (4) einer Verkokung derart unterworfen wird, um das Rohr porös zu machen.

11. Anwendung des Verfahrens nach irgendeinem der Ansprüche 1 bis 9 zur Fertigung von Rohren und insbesondere von Angelrohren, Golfschlägern, Masten von Booten und Windsurfbrettern.

12. Anwendung des Verfahrens nach dem Anspruch 10 zur Fertigung poröser Rohre, die als Filtierrohr oder Filtermembranträger dienen können.

## Claims

1. A process for manufacturing a tube of a composite material consisting in the use of a reinforcing sheet cut into widths, impregnation thereof with a resin, fixing of each preimpregnated width onto a mandrel, rolling the prepreg around the mandrel, placing it in a plastic case, cross-linking the resin, removal from the plastic case and from the mandrel, and possibly cokefaction of the tube thus obtained, characterised in that a reinforcing sheet (1) is used which consists of a strip part (2) and a case part (3) having a uniform and smooth interior surface, the geometry being adapted to that of the mandrel (4), and characterised in that the prepreg obtained is fixed, using said reinforcing sheet, onto the mandrel (4) by introducing said mandrel into the case part (3), in such a way that rotation of the mandrel is able to cause the strip part (2) to be rolled, and so as to obtain a tube with an interior surface which is uniform and smooth.

2. A process according to Claim 1 in which the thickness e of the strip (2) is double that e' of the case (3), so that the whole of the sheet (1) is of substantially the same thickness.

3. A process according to Claim 1 or Claim 2, wherein the texture of the strip (2) is different from that of the case (3).

4. A process according to Claim 3, in which the case (3) is of a mesh structure where the mesh holes are less than 50 µm, and in which the strip (2) has a mesh texture with the mesh holes being greater than 500 µm.

5. A process according to Claim 3, in which the strip (2) has a mesh texture with mesh holes which are less than 50 µm, and in which the case (3) has a mesh texture with mesh holes which are greater than 500 µm.

6. A process according to any of Claims 1 to 5, in which said reinforcing sheet (1) is woven from fibres selected from carbon fibres or their forerunners, glass fibres, Kevlar type fibres (R).

7. A process according to any of Claims 1 to 6, in which said resin which is used as the die is a thermosetting resin selected from the epoxy, unsaturated polyester, phenolic, furan resins.

8. A process according to any of Claims 1 to 7, in which said tube can be frustoconical or cylindrical, with a maximum diameter of less than 10 cm.

9. A process according to any of Claims 1 to 8, in which the preimpregnated width is fixed by automated means onto the mandrel in such a way as to be able to manufacture tubes on an automated production line.

10. A process according to any of Claims 6 to 9, in which said reinforcing sheet (1) is woven from carbon fibres or their forerunners, in which the tube obtained after said plastics film and said mandrel (4) have been removed is subjected to cokefaction so as to render said tube porous.

11. Application of the process according to any of Claims 1 to 9 to the manufacture of tubes, in particular fishing rods, golf clubs, masts for boats and windsurfing boards.

12. Application of the process according to Claim 10 to the manufacture of porous tubes which are used as filtration tubes or filtering membrane supports.
